# NEUE EUROPÄISCHE PATENTSCHRIFT

(11) **EP 1 694 881 B2**
(45) Veröffentlichungstag und Bekanntmachung des Hinweises auf die Entscheidung über den Einspruch: **23.04.2014**
(45) Hinweis auf die Patenterteilung: 11.05.2011
(21) Anmeldenummer: 04802744.5
(22) Anmeldetag: 17.11.2004
(51) Int. Cl.: C23C 14/04, F16J 9/20

(54) **KOLBENRING SOWIE VERFAHREN ZUR HERSTELLUNG DESSELBEN**
PISTON RING AND METHOD FOR THE PRODUCTION THEREOF
SEGMENT DE PISTON ET SON PROCEDE DE PRODUCTION

(30) Priorität: 19.12.2003 DE 10359802
(43) Veröffentlichungstag der Anmeldung: 30.08.2006
(73) Patentinhaber: Federal-Mogul Burscheid GmbH, 51399 Burscheid (DE)
(72) Erfinder: FISCHER, Manfred, 42799 Leichlingen (DE); HERBST-DEDERICHS, Christian, 53332 Bornheim (DE)
(74) Vertreter: Becker Kurig Straus
(86) Internationale Anmeldenummer: PCT/DE2004/002531
(87) Internationale Veröffentlichungsnummer: WO 2005/061751

(56) Entgegenhaltungen:
- EP-A- 0 702 097
- GB-A- 710 950

## Beschreibung

Die Erfindung betrifft einen Kolbenring, beinhaltend eine mit einem Laufflächenprofil versehene Lauffläche sowie eine obere und eine untere Flankenfläche.

Der EP-B 0 702 097 ist ein Gleitkörper zu entnehmen, bei dem die Oberfläche eines Substrats mit einer Verbindung beschichtet ist, die mindestens Chromnitrid enthält, bei dem eine säulenartige Kristallstruktur in einer Spannungsbruchoberfläche der Beschichtung vorhanden ist, wobei die Säulen von der Substratoberfläche zu der Beschichtungsoberfläche hin ausgerichtet sind. Die Porosität der Beschichtung soll auf der Basis von Chromnitrid zwischen 1,5 und 20 % liegen, wobei die Dicke der Beschichtung zwischen 1 µm und 80 µm beträgt. Bedarfsweise kann zwischen dem Grundwerkstoff und der Beschichtung eine aus Chrom bestehende Zwischenschicht vorgesehen werden. Der Gleitkörper kann ein Kolbenring sein, bei dem die Beschichtung mindestens auf der Umfangsgleitfläche vorgesehen ist. Der Gleitkörper soll entweder mit Metallnitrid oder mit Metallcarbid beschichtet werden, wobei einerseits das PVD (Physical Vapour Deposition) und andererseits das CVD (Chemical Vapour Deposition) Verfahren zum Einsatz gelangen kann. Die Zusammensetzung der Beschichtung besteht hier aus CrN, Cr₂N oder einer Mischung daraus, in einer einheitlichen Phase. Laufflächenbeschichtungen, die mit dem PVD, bzw. dem CVD-Verfahren auf der Lauffläche des Gleitkörpers (Kolbenringes) abgeschieden worden sind, haben für ihren technischen Einsatzfall sehr positive Effekte. Nachteilig ist, dass PVD-Schichten sich nicht wirtschaftlich schleifend bearbeiten lassen. Daher konnte bislang nur eine Kolbenringauslegung verwendet werden, die nach der Beschichtung keine Schleifbearbeitung erforderten.

Eine solche Auslegung ist in allen bekannten Fällen eine vollständig beschichtete Lauffläche. Da der Verbund zwischen PVD-Beschichtung und Grundwerkstoff unter sehr hohen Spannungen steht, muß zur Vermeidung von Kantenabplatzern eine stark angefaste Kante eingesetzt werden. Diese allerdings reduziert die Fähigkeit des Rings zum Abstreifen von Öl beträchtlich.

Wünschenswert allerdings wäre, einen Ring mit einer PVD beschichteten Lauffläche und scharfen unteren Laufkante zu haben.

Kolbenringe mit scharfkantig ausgeprägten Laufkanten sind bekannt für ein optimales Ölabstreifverhalten. Selbiges lässt sich mit dem genannten Stand der Technik jedoch nicht realisieren, so dass trotz der hochwertigen Laufflächenbeschichtung der praktische Einsatzbereich eher nur bedingt gegeben ist.

Der Erfindung liegt daher die Aufgabe zugrunde, den bekannten Stand der Technik gemäß EP-B 0 702 097 dahingehend weiterzubilden, dass zum einen nicht die vollständige Lauffläche mit einer derartigen Beschichtung versehen werden muss und zum anderen eine optimierte Ölabstreifwirkung im Betriebszustand gewährleistet wird.

Diese Aufgabe wird gelöst durch einen Kolbenring, gemäß Anspruch 1.

Vorteilhafte Weiterbildungen des Erfindungsgegenstandes sind den zugehörigen gegenständlichen Unteransprüchen zu entnehmen.

Die Aufgabe wird auch gelöst durch ein Verfahren gemäß Anspruch 14.

Vorteilhafte Weiterbildungen des erfindungsgemäßen Verfahrens sind den zugehörigen verfahrensgemäßen Unteransprüchen zu entnehmen.

Durch den Erfindungsgegenstand kann somit das bewährte PVD oder CVD-Verfahren weiterhin sinnvoll eingesetzt werden und darüber hinaus auch der Effekt des Ölabstreifens vorteilhaft verbessert werden.

Der Erfindungsgegenstand baut auf in der Praxis eingesetzten Grundkörpern auf, die bereits mit unterschiedlichst gestalteten Laufflächenprofilen wie beispielsweise ein- oder mehrseitige Kammerungen partiell konische Laufflächenbereiche, Nuten oder dergleichen versehen sind. Ein weiterer Vorteil des Erfindungsgegenstandes ist darin begründet, dass je nach Anwendungsfall, der Grundkörper teilweise mit einer galvanischen Beschichtung versehen werden kann, die beispielsweise aus Chrom besteht. Der Grundkörper selber kann aus Stahl oder Guss bestehen.

In Analogie zum Stand der Technik gemäß EP-B 0 702 097 wird die Aufdampfschicht auf der Grundlage von Cr und N erzeugt und in gleicher Weise auf die Lauffläche des Grundkörpers aufgebracht werden.

Je nach Einsatzfall kann es sinnvoll sein, das Laufflächenprofil mit mindestens einer Hinterschneidung auszugestalten, so dass zwischen dem verbleibenden Steg bzw. der Kammerwand und der Aufdampfschicht an sich im Betriebszustand des Kolbenringes ein Ölhaltereservoir ausbildet.

Ebenfalls denkbar ist, das Laufflächenprofil dergestalt auszuformen, dass ein poröser Übergangsbereich zwischen dem verbleibenden Steg bzw. der Kammerwand und der Aufdampfschicht gebildet wird. Bedingt durch die Porosität können ebenfalls Bereiche zur Ölrückhaltung erzeugt werden.

Die entfernbaren Abdeckungen können unterschiedlichster Art sein, wobei der Fachmann für den jeweiligen Anwendungsfall die geeignete Abdeckung auch unter wirtschaftlichen Gesichtspunkten auswählen wird. Die Abdeckung kann beispielsweise einstückig aus dem Material des Grundkörpers herausgeformt sein und nach Aufbringung der Aufdampfschicht vom Grundkörper abgetrennt werden. Hiermit ist der besondere Vorteil verbunden, dass die ansonsten nicht wirtschaftlich schleifbaren, sehr harten Aufdampfschichten durch einfache Weise entfernt werden können, so dass einerseits eine Verschleißschutzschicht und andererseits die im wesentlichen scharfkantige Laufkante gebildet wird. Ebenfalls denkbar sind Metall- oder Kunststoffbänder als Abdeckungen.

Der Erfindungsgegenstand ist anhand eines Ausführungsbeispieles in der Zeichnung dargestellt und wird wie folgt beschrieben. Es zeigen:
- Figur 1: Prinzipielle Darstellung eines Kolbenring-Beschichtungsverfahrens mit partieller Abdeckung der einzelnen Kolbenringe.
- Figuren 2 bis 5: Beispiele unterschiedlich profilierter Kolbenringe, einerseits mit und andererseits mit entfernter Abdeckung.

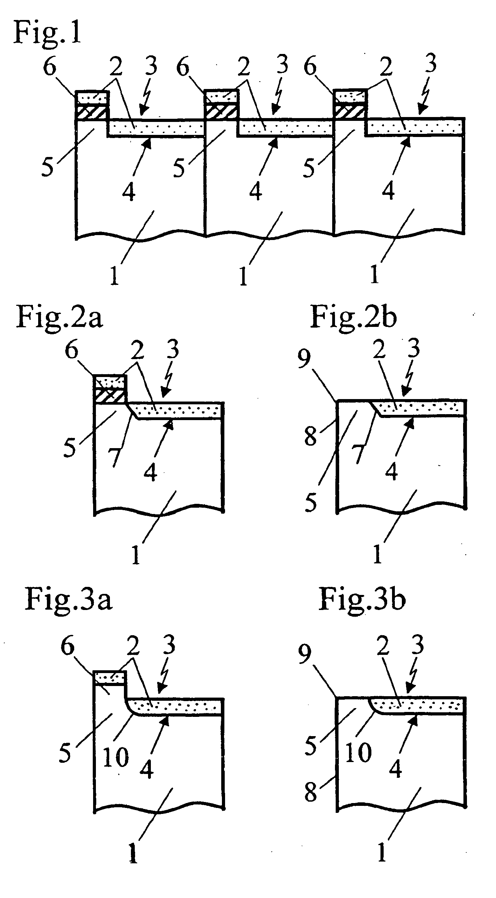

Figur 1 zeigt als Prinzipskizze mehrere hintereinander aufgereihte Kolbenringe 1, die mit einer Aufdampfschicht 2 versehen sind. Ein jeder Kolbenring 1 verfügt über ein auf der Lauffläche 3 vorgesehenes Laufflächenprofil 4, hier gebildet durch eine einseitige Kammerung. Der verbleibende Steg 5 ist mit einer entfernbaren Abdeckung 6 versehen. Nachdem die Abdeckung 6 aufgebracht ist, wird das Kolbenringpaket, gebildet aus den Kolbenringen 1 - wie beispielsweise in der EP-B 0 702 097 angesprochen - einer Aufdampfbeschichtung nach dem PVD-Verfahren unterzogen, dergestalt, dass die in diesem Beispiel aus CrN bestehende Aufdampfschicht 2 erzeugt wird. Im Anschluß an die Beschichtung werden die Kolbenringe 1 vereinzelt und die Abdeckung 6 entfernt. Sofern noch ein Überstand im Bereich des Steges 5 gegeben sein sollte, kann dieser in einfacher Form soweit abgearbeitet werden, dass - soweit dies gewünscht ist - eine glatte Fläche mit der Aufdampfschicht 2 gegeben ist. Die Aufdampfschicht soll in diesem Beispiel 30 µm betragen.

Die Figuren 2 bis 5 zeigen Kolbenringe 1 mit unterschiedlichen Laufflächenprofilen 4, in unterschiedlichen Bearbeitungszuständen.

Die Figuren 2 a und 2 b zeigen eine unter einem Neigungswinkel in das Laufflächenprofil 4 einlaufende Schräge 7. Auf dem verbleibenden Steg 5 wird die Abdeckung 6 aufgebracht. Figur 2b zeigt den Endzustand des Kolbenringes 1, nachdem die Abdeckung 6 entfernt wurde. Erkennbar ist, dass zwischen der Lauffläche 3 und in diesem Beispiel der unteren Flankenfläche 8 eine im wesentlichen scharfkantige Laufkante 9 gebildet ist.

In gleicher Weise sind die Figuren 3 a und 3 b zu werten, wobei hier ein gerundeter Bereich 10 gegeben ist, der vom Steg 5 in das Laufflächenprofil 4 einläuft. Die Abdeckung 6 soll in diesem Beispiel aus dem Grundwerkstoff des Kolbenringes 1 einstückig herausgeformt sein. Nach Aufbringung der Aufdampfschicht 2 kann im Bereich der Abdeckung 6 vorgesehenes Material abgeschliffen werden. Ist dies aus wirtschaftlichen Gründen nicht sinnvoll, besteht die Möglichkeit, den Steg 5 beispielsweise durch Drehen oder Fräsen so weit abzutragen, bis beispielsweise eine plane Fläche mit der Aufdampfschicht 2 hergestellt ist. Der Fachmann wird hierbei abhängig vom Anwendungsfall das jeweilige Bearbeitungsverfahren auswählen. Auch hier wird - wie Figur 3b zeigt - eine scharfe Lauftlächenkante 9 nach Entfernung der Abdeckung 6 gebildet.

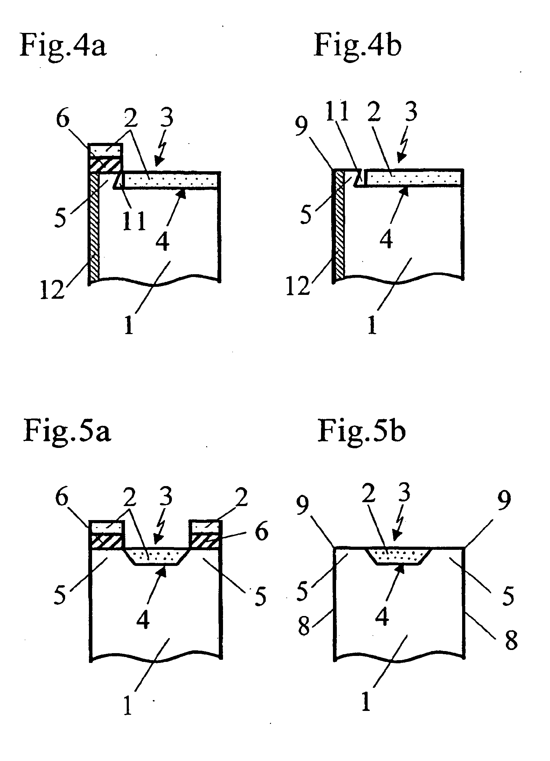

Die Figuren 4 a und 4 b zeigen eine weitere Variante. Der Kolbenring 1 wird nach Aufbringung der Aufdampfschicht 6 teilweise mit einer galvanischen Schicht 12, beispielsweise aus Chrom, versehen. Abweichend zu den Figuren 2 und 3 ist das Profil 4 dergestalt vorgesehen, dass hinterschnittene Bereiche 11 gebildet werden, in die das Aufdampfmaterial nur partiell oder gar nicht eindringen kann. Nach Entfernung der Abdeckung 6 werden hier-je nach Neigungswinkel - entweder poröse Bereiche gebildet oder aber sogar Kammern, die im Betriebszustand des Kolbenringes 1 als Ölhaltereservoirs dienen.

Die Figuren 5 a und 5 b zeigen eine weitere Variante eines Laufflächenprofils 4. Dargestellt ist eine mit Schrägen versehene Nut, wobei die äußeren Stege 5 jeweils mit einer Abdeckung 6 versehen werden. Nach Entfernung der Abdeckung 6 werden - wie Figur 5b zeigt - zwischen der Lauffläche 3 und den Flankenflächen 8 scharfkantige Laufkanten 9 gebildet.

## Patentansprüche

1. Kolbenring, beinhaltend eine mit einem Laufflächenprofil (4) versehene Lauffläche (3) sowie eine obere und eine untere Flankenfläche (8), wobei zumindest die Lauffläche (3) mit einer Aufdampfschicht (2) auf Basis von Cr und N versehen ist, dergestalt, dass ein Teilbereich der Lauffläche (3) mit einer entfernbaren Abdeckung (6) versehen ist, so dass nach Erzeugung der Aufdampfschicht (2) und Entfernung der Abdeckung (6) eine im wesentlichen scharfkantige Laufkante (9) zwischen der Lauffläche (3) und zumindest einer der Flankenflächen (8) gegeben ist.

2. Kolbenring nach Anspruch 1, **dadurch gekennzeichnet, dass** das Laufflächenprofil (4) durch eine Kammerung gebildet ist, wobei im Bereich mindestens eines der verbleibenden Stege (5) die entfernbare Abdeckung (6) vorgesehen ist.

3. Kolbenring nach Anspruch 1, **dadurch gekennzeichnet, dass** das Laufflächenprofil (4) durch einen partiell konisch sowie einen sich daran anschließenden zylindrisch geformten Bereich gebildet ist, wobei im zylindrischen Bereich die entfernbare Abdeckung (6) vorgesehen ist.

4. Kolbenring nach Anspruch 1, **dadurch gekennzeichnet, dass** das Laufflächenprofil (4) durch mindestens eine Nut gebildet ist, wobei zumindest einer der Stege (5) mit der entfernbaren Abdeckung (6) versehen ist.

5. Kolbenring nach einem der Ansprüche 1 bis 4, **dadurch gekennzeichnet, dass** die entfernbare Abdeckung (6) aus dem Grundwerkstoff des Kolbenringes (1) einstückig herausgeformt ist.

6. Kolbenring nach einem der Ansprüche 1 bis 4, **dadurch gekennzeichnet, dass** die entfernbare Abdeckung (6) durch Bänder oder Streifen gebildet ist.

7. Kolbenring nach einem der Ansprüche 1 bis 6, **dadurch gekennzeichnet, dass** die Aufdampfschicht (2) durch das PVD- oder CVD-Verfahren in Stärken zwischen 5 und 70 µm aufgebracht ist.

8. Kolbenring nach einem der Ansprüche 1 bis 7, **dadurch gekennzeichnet, dass** mindestens eine Ringflanke (8) mit einer galvanischen Schicht (12) versehen ist.

9. Kolbenring nach einem der Ansprüche 1 bis 8, **dadurch gekennzeichnet, dass** die galvanische Schicht (12) auf Basis von Chrom gebildet ist.

10. Kolbenring nach einem der Ansprüche 1 bis 9, mit einem Grundmaterial aus Stahl oder Guss.

11. Kolbenring nach einem der Ansprüche 1 bis 10, **dadurch gekennzeichnet, dass** das Laufflächenprofil (4) mit mindestens einer Hinterschneidung (11) versehen ist, so dass zwischen dem Steg (5) und der Aufdampfschicht (2) ein Ölhaltereservoir gebildet ist.

12. Kolbenring nach einem der Ansprüche 1 bis 11, **dadurch gekennzeichnet, dass** das Laufflächenprofil (4) dergestalt ausgebildet ist, dass ein poröser Übergangsbereich zwischen dem Steg (5) und der Aufdampfschicht (2) erzeugbar ist.

13. Kolbenring nach einem der Ansprüche 1 bis 12, **dadurch gekennzeichnet, dass** die scharfkantige Laufkante (9) zwischen der Lauffläche (3) und der unteren Flankenfläche (8) vorgesehen ist.

14. Verfahren zur Erzeugung einer Aufdampfschicht (2) auf einer mit einem Laufflächenprofil (4) vorgesehenen Lauffläche (3) eines Kolbenringes (1), indem ein mit dem Laufflächenprofil (4) versehener Grundkörper außerhalb des Laufflächenprofiles (4) mit einer Abdeckung (6) versehen, eine Aufdampfschicht (2) auf Basis von Cr und N auf die Lauffläche (3) aufgebracht und anschließend die Abdeckung (6) entfernt wird, so dass im Anschluss an die Entfernung der Abdeckung (6) zwischen der Lauffläche (3) und mindestens einer der Flankenflächen (8) des Grundkörpers eine im wesentlichen scharfkantige Laufkante (9) gebildet wird.

15. Verfahren nach Anspruch 14, **dadurch gekennzeichnet, dass** die Aufdampfschicht (2) durch das PVD- oder CVD-Verfahren erzeugt wird.

16. Verfahren nach Anspruch 14 oder 15, **dadurch gekennzeichnet, dass** der Grundkörper im Bereich mindestens einer der Flankenflächen (8) mit einer galvanischen Schicht (12) versehen wird.

17. Verfahren nach einem der Ansprüche 14 bis 16, **dadurch gekennzeichnet, dass** die Aufdampfschicht (2) in einer Schichtdicke zwischen 5 und 70 µm erzeugt wird.

18. Verfahren nach einem der Ansprüche 14 bis 17, **dadurch gekennzeichnet, dass** das Laufflächenprofil (4) dergestalt ausgebildet wird, dass bei der Aufbringung der Aufdampfschicht (2) poröse Übergangsbereiche gebildet werden.

19. Verfahren nach einem der Ansprüche 14 bis 18, **dadurch gekennzeichnet, dass** das Laufflächenprofil (4) dergestalt ausgebildet wird, dass bei der Aufbringung der Aufdampfschicht (2) Hinterschneidungen (11) zur Ausbildung eines Ölhaltereservoirs gebildet werden.

## Claims

1. Piston ring comprising a running surface (3) provided with a running surface profile (4), and an upper and a lower flank surface (8), at least the running surface (3) being provided with a deposition layer (2) on the basis of Cr and N such that a part area of the running surface (3) is provided with a removable cover (6) so that after generation of the deposition layer (2) and removal of the cover (6), a substantially sharp-edged running edge (9) is provided between the running surface (3) and at least one of the flank surfaces (8).

2. Piston ring according to claim 1, **characterized in that** the running surface profile (4) is formed by a chamber, wherein the removable cover (6) is provided in the region of at least one of the remaining webs (5),

3. Piston ring according to claim 1, **characterized in that** the running surface profile (4) is formed by a partially tapered and a cylindrical region adjacent thereto, the removable cover (6) being provided in the cylindrical region.

4. Piston ring according to claim 1, **characterized in that** the running surface profile (4) is formed by at least one groove, wherein at least one of the webs (5) is provided with the removable cover (6).

5. Piston ring according to any of claims 1 to 4, **characterized in that** the removable cover (6) is formed as one piece from the base material of the piston ring (1).

6. Piston ring according to any of claims 1 to 4, **characterized in that** the removable cover (6) is formed by bands or strips.

7. Piston ring according to any of claims 1 to 6, **characterized in that** the deposition layer (2) is applied by the PVD or CVD method in thicknesses between 5 and 70 µm.

8. Piston ring according to any of claims 1 to 7, **characterized in that** at least one ring flank (8) is provided with a galvanic coating (12).

9. Piston ring according to any of claims 1 to 8, **characterized in that** the galvanic coating (12) is formed on a chromium basis.

10. Piston ring according to any of claims 1 to 9, with a base material made of steel or cast.

11. Piston ring according to any of claims 1 to 10, **characterized in that** the running surface profile (4) is provided with at least one undercut (11) so that an oil retention reservoir is formed between the web (5) and the deposition layer (2).

12. Piston ring according to any of claims 1 to 11, **characterized in that** the running surface profile (4) is formed such that a porous transitional area can be created between the web (5) and the deposition layer (2);

13. Piston ring according to any of claims 1 to 12, **characterized in that** the sharp-edged running edge (9) is provided between the running surface (3) and the lower flank surface (8).

14. Method for generating a deposition layer (2) on a running surface (3), provided with a running surface profile (4), of a piston ring (1), in which a base body provided with the running surface profile (4) is provided with a cover (6) outside the running surface profile (4), a deposition layer (2) on the basis of CR and N being applied to the running surface (3) and then the cover (6) is removed so that after removal of the cover (6), between the running surface (3) and at least one of the flank surfaces (8) of the base body a substantially sharp-edged running edge (9) is formed.

15. Method according to claim 14, **characterized in that** the deposition layer (2) is generated by the PVD or CVD method.

16. Method according to claim 14 or 15, **characterized in that** the base body is provided with a galvanic coating (12) in the region of at least one of the flank surfaces (8).

17. Method according to any of claims 14 to 16, **characterized in that** the deposition layer (2) is generated in a layer thickness between 5 and 70 µm.

18. Method according to any of claims 14 to 17, **characterized in that** the running surface profile (4) is formed such that on application of the deposition layer (2), porous transition regions are formed.

19. Method according to any of claims 14 to 18, **characterized in that** the running surface profile (4) is formed such that on application of the deposition layer (2), undercuts (11) are formed to create an oil retention reservoir.

## Revendications

1. Segment de piston, comportant une surface de glissement (3) munie d'un profil de surface de glissement (4) ainsi que des surfaces de flanc supérieure et inférieure (8), dans lequel au moins la surface de glissement (3) est munie d'une couche déposée en phase vapeur (2) de à base de Cr et N. telle manière qu'une partie de la surface de glissement (3) soit munie d'un recouvrement enlevable (6), de sorte qu'après production de la couche déposée en phase vapeur (2) et enlèvement du recouvrement (6), il existe une arête de surface de glissement (9) essentiellement à angle vif entre la surface de glissement (3) et au moins une des surfaces de flanc (8).

2. Segment de piston selon la revendication 1, **caractérisé en ce que** le profil de surface de glissement (4) est formé par une chambre, le recouvrement enlevable (6) étant prévu dans la zone d'au moins un des méplats restants (5).

3. Segment de piston selon la revendication 1, **caractérisé en ce que** le profil de surface de glissement (4) est formé par une zone partiellement conique et d'une zone cylindrique lui faisant suite, le recouvrement enlevable (6) étant prévu dans la zone cylindrique.

4. Segment de piston selon la revendication 1, **caractérisé en ce que** le profil de surface de glissement (4) est formé par au moins une rainure, au moins un des méplats (5) étant muni du recouvrement enlevable (6).

5. Segment de piston selon une des revendications 1 à 4, **caractérisé en ce que** le recouvrement enlevable (6) est formé d'une pièce à partir du matériau de base du segment de piston (1).

6. Segment de piston selon une des revendications 1 à 4, **caractérisé en ce que** le recouvrement enlevable (6) est formé par des bandes ou des lamelles.

7. Segment de piston selon une des revendications 1 à 6, **caractérisé en ce que** la couche déposée en phase vapeur (2) est appliqué par le procédé PVD ou CVD dans des épaisseurs comprises entre 5 et 70 µm.

8. Segment de piston selon une des revendications 1 à 7, **caractérisé en ce qu'**au moins un flanc annulaire (8) est muni d'une couche galvanique (12).

9. Segment de piston selon une des revendications 1 à 8, **caractérisé en ce que** la couche galvanique (12) est formée à base de chrome.

10. Segment de piston selon une des revendications 1 à 9, avec un matériau de base en acier ou en fonte.

11. Segment de piston selon une des revendications 1 à 10, **caractérisé en ce que** le profil de surface de glissement (4) est muni d'au moins une contre-dépouille (11), de sorte qu'un réservoir de rétention d'huile est formé entre le méplat (5) et la couche déposée en phase vapeur (2).

12. Segment de piston selon une des revendications 1 à 11, **caractérisé en ce que** le profil de surface de glissement (4) est formé de telle manière qu'une zone de transition poreuse peut être produite entre le méplat (5) et la couche déposée en phase vapeur (2).

13. Segment de piston selon une des revendications 1 à 12, **caractérisé en ce que** l'arête de surface de glissement à angle vif (9) est prévue entre la surface de glissement (3) et la surface de flanc inférieure (8).

14. Procédé pour produire une couche déposée en phase vapeur (2) sur une surface de glissement (3) d'un segment de piston (I) munie d'un profil de surface de glissement (4), par le fait qu'un corps de base muni du profil de surface de glissement (4) est muni, à l'extérieur du profil de surface de glissement (4) d'un recouvrement (6), une couche déposée en phase vapeur (2) à base de Cr et N appliquée sur la surface de glissement (3) et ensuite le recouvrement (6) enlevé, de sorte qu'à la suite de l'enlèvement du recouvrement (6), il est formé une arête de surface de glissement (9) essentiellement à angle vif entre la surface de glissement (3) et au moins une des surfaces de flanc (8) du corps de base.

15. Procédé selon la revendication 14, **caractérisé en ce que** la couche déposée en phase vapeur (2) est produite par le procédé PVD ou CVD.

16. Procédé selon la revendication 14 ou 15, **caractérisé en ce que** le corps de base est muni d'une couche galvanique (12) dans la zone d'au moins une des surfaces de flanc (8).

17. Procédé selon une des revendications 14 à 16, **caractérisé en ce que** la couche déposée en phase vapeur (2) est produite dans une épaisseur de couche comprise entre 5 et 70 µm.

18. Procédé selon une des revendications 14 à 17, **caractérisé en ce que** le profil de surface de glissement (4) est formé de telle manière que des zones de transition poreuses sont formées lors de l'application de la couche déposée en phase vapeur (2).

19. Procédé selon une des revendications 15 à 18, **caractérisé en ce que** le profil de surface glissement (4) est formé de telle manière que des contre-dépouilles (11) pour former réservoir de rétention d'huile sont formées lors de l'application de la couche déposée phase vapeur (2).
